# EUROPÄISCHE PATENTSCHRIFT

(11) **EP 3 596 806 B1**
(45) Veröffentlichungstag und Bekanntmachung des Hinweises auf die Patenterteilung: **09.09.2026**
(21) Anmeldenummer: 18732308.4
(22) Anmeldetag: 13.06.2018
(51) Int. Cl.: H02K 5/22, H02K 16/00, H02K 11/35, H04W 84/20, F24F 13/20, F24F 11/54, F24F 11/56, G08C 17/02

(54) **DRAHTLOSÜBERTRAGUNG**
WIRELESS TRANSMISSION
TRANSMISSION SANS FIL

(30) Priorität: 28.07.2017 DE 102017117130
(43) Veröffentlichungstag der Anmeldung: 22.01.2020
(73) Patentinhaber: EBM-Papst Mulfingen GmbH&CO. KG, 74673 Mulfingen (DE)
(72) Erfinder: BÜRKERT, Martin, 74677 Dörzbach-Hohebach (DE); LIPP, Helmut, 74677 Dörzbach-Hohebach (DE); SAUER, Thomas, 97980 Bad Mergentheim (DE); HAAS, Günter, 74673 Mulfingen (DE); HUMM, Markus, 74679 Weissbach (DE); WECKERT, Marco, 97980 Bad Mergentheim (DE)
(74) Vertreter: Staeger & Sperling Partnerschaftsgesellschaft mbB
(86) Internationale Anmeldenummer: PCT/EP2018/065705
(87) Internationale Veröffentlichungsnummer: WO 2019/020269

(56) Entgegenhaltungen:
- EP-A1- 2 881 676
- EP-A1- 3 166 214
- WO-A1-2015/038362
- WO-A1-2017/061962
- JP-A- 2002 290 416
- KR-A- 20090 041 912
- KR-A- 20170 078 824
- US-A1- 2014 210 321
- US-A1- 2017 062 937

## Beschreibung

Die Erfindung betrifft ein Netzwerk aus zwei oder mehreren Elektroantrieben, die drahtlos miteinander kommunizieren können bzw. ein Netzwerk aus zwei oder mehreren Geräten, welche je einen Elektroantrieb aufweisen.

Beim Betrieb von z. B. klimatechnischen Anlagen, lufttechnischen Anlagen und dergleichen kommen regelmäßig eine entsprechende Anzahl an Elektromotoren zum Einsatz, deren Betriebsmodus abhängig vom gewünschten Betriebszustand gesteuert werden muss und daher die für den Prozess vorgegebenen und erforderlichen Betriebsbedingungen aller Elektroantriebe benötigt werden. Es besteht somit ein Bedarf danach, dass diese als Slave-Einheiten arbeitenden Elektroantriebe in einem Netzwerk einerseits mit einer übergeordneten Steuerung, d. h. zum Beispiel der Master-Einheit kommunizieren müssen und teilweise auch untereinander.

Typischerweise werden Elektroantriebe (Slave-Einheiten) im Netzwerk über Bus-Leitungen miteinander verbunden, so dass ein typisches drahtgebundenes Kommunikationsnetz errichtet werden muss, um die Kommunikation mit den Slave-Einheiten sicherzustellen. Hierzu fällt entsprechend der Anzahl der Slave-Einheiten und deren Lage im Netzwerk ein hoher Verdrahtungs- und Montageaufwand an. Besonders problematisch ist dies in bestehenden Gebäuden oder Anlagen, da zusätzliche Kabelverbindungen und Leitungen ggf. erhebliche Kosten bei der Montage nach sich ziehen.

Es besteht daher ein Bedarf danach, den Verkabelungsaufwand zu reduzieren und den Betrieb zu erleichtern. Bisher ist es im Stand der Technik aber nicht zufriedenstellend gelungen, Elektroantriebe als eigenständige Einheiten montagefertig so zu gestalten, dass diese mit geringem Aufwand drahtlos in ein Netzwerk eingebunden werden könnten. Besonders die metallischen Gehäuse von Antriebseinheiten bringen die Problematik mit sich, dass diese wie ein faradayscher Käfig wirken und eine Funkverbindung dadurch gestört wird. Für den Betrieb von Anlagen ist allerdings eine zuverlässige Kommunikation erforderlich.

Es besteht ferner ein Bedarf danach, Elektroantriebe nicht mit einer außenliegenden Schnittstelle mit einem daran verbundenen Transceiver für die Datenkommunikation oder einem gesonderten Funkbauteil außerhalb des Gehäuses versehen zu müssen.

Bisher ist es aber aufgrund der EMV-Anforderungen und der hohen Gehäuseschirmung von geschlossenen Gehäusen und Umhausungen daher nicht zufriedenstellend möglich, Elektroantriebe von z. B. Ventilatoren über eine drahtlose Kommunikation miteinander im Netzwerk zu verbinden.

Druckschriftlicher Stand der Technik im vorliegenden technischen Gebiet ist in den Dokumenten WO 2015/038362 A1, US 2017/062937 A1, KR 2017 0078824 A, EP 2 881 676 A1, JP 2002 290416 A, KR 2009 0041912 A, WO 2017/061962 A1, US 2014/210321 A1 und EP 3 166 214 A1 offenbart.

Vor diesem Hintergrund ist es Aufgabe der vorliegenden Erfindung, vorbenannte Nachteile zumindest teilweise zu reduzieren und eine Lösung bereitzustellen, die eine kostengünstige Installation und einen zuverlässigen Betrieb einer Mehrzahl an Elektroantrieben in einem Netzwerk ermöglicht.

Diese Aufgabe wird gelöst mit einem Netzwerk aus Elektroantrieben gemäß den Merkmalen von Anspruch 1.

Grundgedanke der vorliegenden Erfindung ist es dabei die Elektroantriebe als Slave-Einheiten mit einem integriertem Transceiver oder alternativ einem Funksender zur drahtlose Übertragung von Betriebsparametern oder Daten vorzusehen und in den Elektroantriebsgehäusen jeweils eine geeignete Transmissionsöffnung so vorzusehen, dass ein ungestörter, d. h. insbesondere signalstarker Kommunikationsbetrieb möglich ist.

Erfindungsgemäß werden demnach Elektroantriebe mit einem umfangsgeschlossenen Gehäuse bzw. einer den Antrieb allseitig umschließenden Umhausung vorgesehen, wobei ein Transceiver oder Funksender innerhalb des Gehäuses bzw. der Umhausung vorgesehen ist, der ausgebildet ist Daten drahtlos von einem Master oder einer übergeordneten Steuerung zu erhalten oder an diese zu senden.

Erfindungsgemäß werden zwei oder mehrere solcher Transmissionsöffnungen im Gehäuse des Elektroantriebs vorgesehen.

Erfindungsgemäß wird ein Elektroantrieb bzw. eine Anordnung solcher Elektroantriebe vorgeschlagen, bei der das Gehäuse der Elektroantriebe als ein geschirmtes metallisches Gehäuse ausgebildet ist, so dass eine EMV-Schirmung z. B. gemäß normativer Vorgaben realisiert ist.

Die zuvor angegebenen bestimmungsgemäß angeordneten Transmissionsöffnungen im Gehäuse sind mit Vorteil jeweils als gerichtete Öffnung in einer bestimmten relativen Position und Lage zum Transceiver und zum Master angebracht bzw. angeordnet. So können in einer bevorzugten Ausgestaltung der Erfindung die Kabeldurchführungen so ausgestaltet sein, dass neben der Kabeldurchführung gleichzeitig eine drahtlose Datenübertragung hindurch möglich ist, wenn der Transceiver in einer geeigneten Position hinter der Kabeldurchführung angeordnet ist. Hierzu können z. B. Abdichtungswerkstoffe eingesetzt werden, welche transmissionsdurchlässig für die verwendete Datenübertragung sind.

In einem nicht von der vorliegenden Erfindung umfassten Beispiel kann durch die Verwendung eines zumindest bereichsweise nichtmetallischen Klemmkasten, der eine Informationsübertragung auch ohne "Öffnen" des Gehäuses ermöglicht, eine Datenübertragung realisiert werden. In Sinne der Terminologie der vorliegenden Erfindung stellt damit der Deckel des nichtmetallischen Klemmkastens eine bestimmungsgemäße datendurchlässige Transmissionsöffnung im Gehäuse dar.

In einer ebenfalls alternativen Ausgestaltung der Erfindung ist vorgesehen, dass die Transmissionsöffnungen im Gehäuse als nichtmetallischer Gehäusebereich ausgebildet ist, bei dem in der Gehäusewand des Gehäuses z. B. eine Öffnung vorgesehen ist, die mit einem für Funkwellen durchlässigen Material verschlossen ist, so dass das Gehäuse seine Funktion gegenüber Umwelteinflüssen, wie Schmutz, Staub, Flüssigkeit und auch gegen unbeabsichtigtes Berühren spannungsführender Teile behält (z. B ein IP 67 Gehäuse) aber dennoch eine Transmissionsöffnung für die drahtlose Kommunikation aufweist.

Erfindungsgemäß ist auch eine Ausgestaltung mit Ausrichtung der Zu- oder Abführeinrichtung zu einem Steuergerät mit integriertem Funkmodul für eine optimale Funkverbindung vorgesehen. Dies bedeutet, dass die Ausrichtung der Elektroantriebe bzw. der Transmissionsöffnungen so erfolgt, dass diese in Funkstreckenrichtung zum Master zeigen.

Die Öffnungen für die jeweiligen Kommunikationssignalübertragungsstrecken sind demzufolge übertragungsorientiert ausgerichtet, was zur Vermeidung oder zumindest zur Minimierung von Störungen (wie Reflexionen) durch metallische Umgebung bei der Übertragung der Daten führt.

Besonders vorteilhaft ist es, wenn die drahtlose Übertragungstechnik mittels Standardübertragungsverfahren, wie z.B. W-Lan, Bluetooth, ZigBee, LoRaWan, GSM, UMTS, LTE, Infrarot oder dergleichen realisiert ist, so dass die Transceiver für diese Technologie ausgebildet sind.

Die erfindungsgemäße Lösung lässt sich mit Vorteil für die drahtlose Vernetzung von EC-Ventilatoren im Bereich der Kälte- und Klimatechnik, vorzugsweise bei Wärmetauschern mit mehr als zwei Ventilatoren, einsetzen. Erfindungsgemäß ist das integrierte Funkmodul bzw. der Transceiver auf der Motorleiterplatte direkt und unmittelbar hinter einer Transmissionsöffnung integriert.

In einer besonders vorteilhaften Ausgestaltung bei einer Wärmetauscher aufweisenden klimatechnischen Anlage, werden die Elektronantrieb als Slave-Einheiten und das Steuergerät des Wärmetauschers als Master mit integriertem Funkmodul ausgebildet.

Weiter ist erfindungsgemäß vorgesehen, den Zugangscode zur Änderung von Parameter der Elektroantriebe pro Seriennummer der Slave-Einheit zu vergeben, was ein vereinfachtes Handling der Zugangsdaten mit sich bringt. Ebenfalls von Vorteil ist es, wenn für den Servicefall im Master (Steuergerät) ein eigener Zugangscode hinterlegt ist.

Andere vorteilhafte Weiterbildungen der Erfindung sind in den Unteransprüchen gekennzeichnet bzw. werden nachstehend zusammen mit der Beschreibung der bevorzugten Ausführungsformen der Erfindung anhand der Figuren näher erläutert.

Es zeigt:

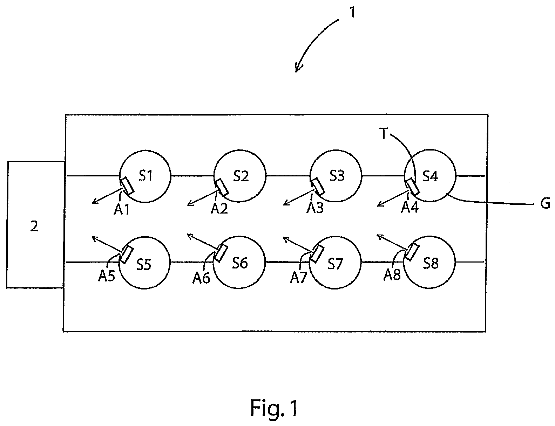

- Fig. 1: eine schematische Ansicht einer erfindungsgemäßen Vorrichtung.

In der Fig. 1 wird beispielhaft und in schematischer Darstellung einer Vorrichtung 1 aus acht Elektroantrieben S1, ..., S8 mit einem jeweils umfangsgeschlossenen Gehäuse G gezeigt, wobei je ein Transceiver oder Funksender T innerhalb des Gehäuses G der jeweiligen Elektroantriebe S1, ..., S8 vorgesehen ist.

Ferner ist eine übergeordnete Steuerung 2 vorgesehen, die zusammen mit den als Slave-Einheiten ausgebildeten Elektroantriebe S1, ..., S8, ein Master-Slave-System zur drahtlose Datenkommunikation mit der übergeordneten Steuerung 2 ausgebildet.

Hierzu sind erfindungsgemäß jeweils zwei oder mehrere bestimmungsgemäß angebrachte Transmissionsöffnungen (A1, ..., A8) im jeweiligen Gehäuse G der Elektroantriebe S1, ..., S8 vorgesehen, um Daten durch die Transmissionsöffnungen hindurch zu senden und zu empfangen.

Das vorliegende Ausführungsbeispiel repräsentiert eine kälte- bzw. klimatechnische Anlage in der die Gehäuse G der Elektroantriebe S1, ..., S8 als geschirmte Gehäuse aus einem metallischen Material ausgebildet sind, so dass dadurch eine EMV-Schirmung der Elektroantriebe S1, ..., S8 realisiert ist.

Die jeweiligen Transceiver oder Funksender T sind hier unmittelbar hinter der jeweiligen Transmissionsöffnung A1, ..., A8 positioniert und in Richtung zum Master 2 ausgerichtet, was repräsentativ durch die Pfeile in der Figur 1 dargestellt wird.

Erfindungsgemäß ist eine Anzahl von Varianten denkbar, welche von der dargestellten Lösung auch bei grundsätzlich anders gearteten Ausführungen Gebrauch macht, wie z. B. die Anpassung der Übertragungstechnik an die Anlagenkonfiguration, mittels eines gängigen Standardübertragungsverfahren, wie z. B. W-Lan, Bluetooth, ZigBee, LoRaWan, GSM, UMTS, LTE, Infrarot oder dergleichen realisiert ist, so dass die Transceiver T jeweils für diese Technologie ausgebildet sind.

## Patentansprüche

1. Vorrichtung (1) aus zwei oder mehreren Elektroantrieben (S1, ..., S8) mit jeweils einem umfangsgeschlossenen geschirmten metallischen Gehäuse (G), wobei ein Transceiver oder Funksender (T) innerhalb des Gehäuses (G) der jeweiligen Elektroantriebe (S1, ..., S8) vorgesehen ist, wobei die Vorrichtung (1) zur drahtlosen Datenkommunikation in einem Netzwerk mit einer übergeordneten Steuerung (2) ausgebildet ist, wofür eine bestimmungsgemäß angebrachte Transmissionsöffnung (A1, ..., A8) im jeweiligen Gehäuse (G) vorgesehen ist, um Daten durch die Transmissionsöffnung (A1, ..., A8) hindurch zu senden und zu empfangen, wobei die jeweiligen Transceiver auf einer Motorleiterplatte direkt hinter der jeweiligen Transmissionsöffnungen (A1, ..., A8) der Elektroantriebe (S1, ..., S8) so angeordnet sind, dass diese auf der Motorleiterplatte in Richtung zur übergeordneten Steuerung (2) ausgerichtet sind, wobei im Gehäuse (G) der jeweiligen Elektroantriebe (S1, ..., S8) zwei oder mehrere Transmissionsöffnungen (A1, ..., A8) vorgesehen sind.

2. Vorrichtung (1) nach Anspruch 1, **dadurch gekennzeichnet, dass** die Transmissionsöffnung(en) (A1, ..., A8) mittels eines nichtmetallischen Gehäuseverschlusses das Gehäuse (G) gegen das Eindringen von Staub und Schmutz verschließen, jedoch transmissionsoffen für die Datenübertragung ist bzw. sind.

3. Vorrichtung (1) nach einem der vorhergehenden Ansprüche 1 oder 2, **dadurch gekennzeichnet, dass** der jeweiligen Transceiver oder Funksender (T) auf der Motorleiterplatte des Elektroantriebs integriert ist, insbesondere direkt und unmittelbar hinter einer Transmissionsöffnung (A1, ..., A8).

4. Vorrichtung (1) nach einem der vorhergehenden Ansprüche 1 bis 3, **dadurch gekennzeichnet, dass** die Transmissionsöffnungen (A1, ..., A8) im Gehäuse (G) gleichzeitig eine Kabeldurchführung ausbilden.

5. Vorrichtung (1) nach einem der vorhergehenden Ansprüche, **dadurch gekennzeichnet, dass** die drahtlose Übertragungstechnik mittels Standardübertragungsverfahren, wie W-Lan, Bluetooth, ZigBee, LoRaWan, GSM, UMTS, LTE, Infrarot oder dergleichen realisiert ist, so dass die Transceiver (T) für diese Technologie ausgebildet sind.

6. Kälte- oder klimatechnische Anlage umfassen eine Vorrichtung (1) gemäß einem der vorhergehenden Ansprüche 1 bis 5, ausgebildet als drahtlos kommunizierendes Master-Slave System, wobei die Steuerung (2) als Master und die Elektroantriebe (S1, ..., S8) als Slave-Einheiten ausgebildet sind.

7. Kälte- oder klimatechnische Anlage gemäß Anspruch 6, **dadurch gekennzeichnet, dass** die Transmissionsöffnungen (A1, ..., A8) der Elektroantriebe (S1, ..., S8) in Richtung zum Master (2) ausgerichtet sind.

8. Kälte- oder klimatechnische Anlage gemäß Anspruch 6 oder 7, **dadurch gekennzeichnet, dass** zur Änderung von Parameter der Elektroantriebe (S1, ..., S8) ein Zugangscode je Seriennummer des jeweiligen Elektroantriebs vorgesehen ist und der Master (2) einen eigenen Zugangscode besitzt.

## Claims

1. An assembly (1) composed of two or more electric drives (S1, ..., S8), each of which is provided with a shielded metal housing (G) that is closed all around, wherein a transceiver or radio transmitter (T) is provided inside the housing (G) of each electric drive (S1, ..., S8), wherein the assembly (1) is configured for wireless data communication in a network with a master controller (2), for which purpose a properly mounted transmission opening (A1, ..., A8) is provided in each housing (G) in order for data to be transmitted and received through the transmission opening (A1, ..., A8), wherein the respective transceivers are arranged on a motor circuit board directly behind the respective transmission openings (A1, ..., A8) of the electric drives (S1, ..., S8) such that they are oriented on the motor circuit board towards the master controller (2), wherein two or more transmission openings (A1, ..., A8) are provided within the housing (G) of the respective electric drives (S1, ..., S8).

2. The assembly (1) according to claim 1, **characterized in that** the transmission opening(s) (A1, ..., A8) seal(s) the housing (G) against the ingress of dust and dirt by means of a non-metallic housing seal, but remain(s) transmissive for data transmission.

3. The assembly (1) according to any one of the preceding claims 1 or 2, **characterized in that** the respective transceivers or radio transmitters (T) are integrated on the motor circuit board of the electric drive, in particular directly and immediately behind a transmission opening (A1, ..., A8).

4. The assembly (1) according to any one of the preceding claims 1 to 3, **characterized in that** the transmission openings (A1, ..., A8) form a cable bushing within the housing (G) at the same time.

5. The assembly (1) according to any one of the preceding claims, **characterized in that** the wireless transmission technology is implemented by means of standard transmission methods such as Wi-Fi, Bluetooth, ZigBee, LoRaWan, GSM, UMTS, LTE, infrared or the like, and therefore the transceivers (T) are configured for such technology.

6. A refrigeration or air-conditioning system, comprising an assembly (1) according to any one of the preceding claims 1 to 5, configured as a wirelessly communicating master/slave system, wherein the controller (2) is configured as a master and the electric drives (S1, ..., S8) are configured as slave units.

7. The refrigeration or air-conditioning system according to claim 7, **characterized in that** the transmission openings (A1, ..., A8) of the electric drives (S1, ..., S8) are oriented towards the master (2).

8. The refrigeration or air-conditioning system according to claim 6 or 7, **characterized in that**, for changing parameters of the electric drives (S1, ..., S8), an access code is assigned per serial number of the respective electric drives, and **in that** the master (2) has its own access code.

## Revendications

1. Dispositif (1) constitué de deux ou plusieurs entraînements électriques (S1, ..., S8) comprenant chacun un carter métallique blindé fermé sur sa périphérie (G), un émetteur-récepteur ou émetteur radio (T) étant prévu à l'intérieur du carter (G) des entraînements électriques respectifs (S1, ..., S8), le dispositif (1) étant configuré pour une communication de données sans fil dans un réseau avec une commande de niveau supérieur (2), pour laquelle une ouverture de transmission (A1, ..., A8) ménagée de manière appropriée est prévue dans le carter respectif (G) afin d'émettre et de recevoir des données à travers l'ouverture de transmission (A1, ..., A8), les émetteurs-récepteurs respectifs étant disposés sur une carte de circuit imprimé de moteur directement derrière les ouvertures de transmission respectives (A1, ..., A8) des entraînements électriques (S1, ..., S8) de telle sorte que ceux-ci soient orientés sur la carte de circuit imprimé de moteur en direction de la commande de niveau supérieur (2), deux ou plusieurs ouvertures de transmission (A1, ..., A8) étant prévues dans le carter (G) des entraînements électriques respectifs (S1, ..., S8).

2. Dispositif (1) selon la revendication 1, **caractérisé en ce que** les ouvertures de transmission (A1, ..., A8) ferment le carter (G) contre la pénétration de poussière et de saleté au moyen d'une fermeture de carter non métallique, tout en étant perméables à la transmission pour la transmission de données.

3. Dispositif (1) selon l'une des revendications précédentes 1 ou 2, **caractérisé en ce que** l'émetteur-récepteur ou émetteur radio (T) respectif est intégré sur la carte de circuit imprimé de moteur de l'entraînement électrique, en particulier directement et immédiatement derrière une ouverture de transmission (A1, ..., A8).

4. Dispositif (1) selon l'une des revendications précédentes 1 à 3, **caractérisé en ce que** les ouvertures de transmission (A1, ..., A8) dans le carter (G) forment simultanément un passage de câble.

5. Dispositif (1) selon l'une des revendications précédentes, **caractérisé en ce que** la technologie de transmission sans fil est mise en œuvre au moyen de procédés de transmission standard, tels que le Wi-Fi, le Bluetooth, le ZigBee, le LoRaWAN, le GSM, l'UMTS, la LTE, l'infrarouge ou similaires, de sorte que les émetteurs-récepteurs (T) soient configurés pour cette technologie.

6. Installation de réfrigération ou de conditionnement d'air comprenant un dispositif (1) selon l'une des revendications précédentes 1 à 5, configurée sous la forme d'un système maître-esclave à communication sans fil, dans laquelle la commande (2) est configurée comme maître et les entraînements électriques (S1, ..., S8) sont configurés comme unités esclaves.

7. Installation de réfrigération ou de conditionnement d'air selon la revendication 6, **caractérisée en ce que** les ouvertures de transmission (A1, ..., A8) des entraînements électriques (S1, ..., S8) sont orientées en direction du maître (2).

8. Installation de réfrigération ou de conditionnement d'air selon la revendication 6 ou 7, **caractérisée en ce que**, pour la modification de paramètres des entraînements électriques (S1, ..., S8), un code d'accès par numéro de série de l'entraînement électrique respectif est prévu et le maître (2) possède son propre code d'accès.
